# EUROPEAN PATENT APPLICATION

(11) **EP 1 559 493 A2**
(43) Date of publication of application: **03.08.2005**
(21) Application number: 04030794.4
(22) Date of filing: 27.12.2004
(51) Int. Cl.: B23C 5/10

(54) **Ballnose end mill**

(30) Priority: 29.12.2003 IL 15963903
(71) Applicant: Hanita Metal Works Ltd., 22832 Shlomi Industrial Area (IL)
(72) Inventor: Volokh, Vladimir, Yeffe-Nof Me'alot 24952 (IL)
(74) Representative: Modiano, Guido, Dr.-Ing.

(57) **Abstract**

The present invention relates to tools for the machining of materials by milling or drilling.

The invention provides an improved form for an end mill having a semi-spherical cutting end, or flat cutting end, or drill end the center area of which is configured to better eject chips and thus to improve the surface finish of the metal work piece and tool life.

The comprising a body portion to be gripped by a machine tool and a plurality of flutes machined to form a cutting tooth adjacent to the flute, each tooth being provided with a chisel edge, the cutting end being semispherical, or flat, or like drill point and when viewed endwise there being seen a cutting edge starting proximate to the tool center at a position B above the x axis and 0.5A to the right of the y axis.

## Description

### Field and Background of the Invention

The present invention relates to tools for the machining of materials by milling or drilling. More particularly, the invention provides an improved form for an end mill having a semi-spherical cutting end, or flat cutting end, or drill end the center area of which is configured to better eject chips and thus to improve the surface finish of the metal work piece and tool life.

End mills and drills are widely used in milling and drilling operations due to their versatile range of application and due to the moderate first cost of the tool. End mills and drills are often of cylindrical shape, and are available up to about 80 mm diameter. End mills having a semispherical cutting end (referred to as ball end or ballnose) are widely used, being particularly useful for CNC work producing complex shapes. End mills with flat cutting end are widely used in ramping, planging and orbital driling and drillind applications. Drills are widely used in different drilling applications on milling and turning machines. An end mill typically has 2 to 10 teeth, depending on diameter size and whether intended for rough cutting or finishing. End mills with a flat cutting end used in ramping, planging and orbital driling and drilling applications typically has 2 to 6 teeth. Drills used in different drilling applications on milling and turning machines typically have 2 to 4 teeth. Teeth are usually of spiral (helical) shape, but can be straight parallel to the axis. Material of construction is high speed steel, solid carbide, cermet or ceramic, or combinations thereof.
An important problem which has attracted much attention is the clearing away of the chips produced during machining. Milled and drilling chips are never continuous and if not removed may again be drawn into the cutting area between one of the cutting teeth and the work piece. Same with the clearing away of the chips produced during machining is very important in driliing aplications. The result of the not clearing away of the chips produced during machining is a degraded surface finish marred by small grooves or scratches, vibration during machining, short tool life and poor dimensional accuracy. While much can be achieved by improved coolant flow and by air blasts, an important further factor in effecting improvement is the shape of the cutting teeth.

Many different cutter forms are seen in the prior art. Among relevant patents are the following: Japanese application 2001047671 of Takeshi, Japanese patents JP2001334405 and JP2001009524 to Masami, JP2003053617 to Takeshi, JP2001341026 to Ryosuke, US patent 4,934,881 to Tsujimura et al., 5,188,487 to Okawa et al., 5,221,162 to Okawa, 5,294,219 to Shiratori et al., and US Patents nos. 6,231,275 B1 and 6,652,201 B2 to Kunimori et al.
Cutters made according to the Japanese patents. JP2001334405 and JP2001341026 have been found to provide inadequate chip clearance causing chip reentry and also insufficient access for coolant to the center of the end mill.
Unfortunately, without carefully controlled test machining, there is no way of knowing how effective the prior art end mill forms are, merely from the description of the tooth geometry provided. Furthermore, the tooth designs disclosed in the above documents may be optimized for maximum metal removal, or for maximum tool wear life or for resistance to breakage, or for hard or for soft materials, and the tooth form will vary greatly as a function of the different design parameters, and of the cutter diameter.
Extensive experience with various prior-art cutters has however indicated the continued existence of surface flaws in work pieces machined by prior art ballnose end mills, and the root of the problem has been traced to chips which were not dispersed by the coolant and which reentered the cutting area and in the course of machining lodged momentarily between the end mill and the work piece.

### Objects of the Invention

It is therefore one of the objects of the present invention to obviate the disadvantages of prior art ballnose end mills and drills and to provide a design which improves dispersal of the chip out of the cutting area without diminish other properties of the end mill or drill.
It is a further object of the present invention to thereby improve surface finish of the work piece, reduce tool vibration and extend tool life.

### Summary of the Invention

The present invention achieves the above objects by providing a ballnose end mill, end mills with flat cutting end used in ramping, planging and orbital driling and drilling applications and drills of diameter D configured for improved chip removal, comprising a body portion to be gripped by a machine tool and a plurality of flutes machined to form a cutting tooth adjacent to said flute, each tooth being provided with a chisel edge, the cutting end being semispherical, or flat, or like drill point and when viewed endwise there being seen a cutting edge starting proximate to the tool center at a position B above the x axis and 0.5A to the right of the y axis, said cutting edge extending at an angle a relative to the y axis for a length C, value of A, being the total off-set between cutting edges of two teeth disposed at 180° to each other, for the machining of different materials is 0.003D to 0.030D, both B and C having lengths of between 0.3A to 1.5A, and the angle a having a value of between 5° - 45°.

### Preferred Embodiment of the Invention

In a preferred embodiment of the present invention there is provided a ballnose end mill, or flat end mill, or drill wherein said cutting edge starting at position B is curved at a radius R, the locus of said radius being at its right side when viewing the upper tooth of the semi-spherical end, or flat end mill, or drill and the value of R is 0.5A - 5A.

The present inventors have prepared a 16 mm diameter two-flute ballnose end mill which was optimized for use on hard materials, coated TiAlN. The end mill was manufactured according to the present specification and produced a smooth surface free from the characteristic flaws resulting from faulty chip clearing.
Cutting conditions: Material Steel D2 hardened to 60 - 62 HRc,
Cutting speed - 150 m/min, cutting feed - 0.08mm/ teeth, Axial depth of cut - 0.3mm,
Radial depthof cut - 0.3mm, dry cutting.
Test results: tool life 200m in material, surface finish 8-12 micro inch.

### Short description of the Drawings

The invention will now be described further with reference to the accompanying drawings, which represent by example preferred embodiments of the invention. Structural details are shown only as far as necessary for a fundamental understanding thereof. The described examples, together with the drawings, will make apparent to those skilled in the art how further forms of the invention may be realized.
In the drawings:
FIG. 1 is an elevational view of a prior-art ballnose end mill;
FIG. 1a an elevational view of a prior-art flat end mill;
FIG. 1b an elevational view of a prior-art drill.
FIG. 2 is an end view of the prior art ballnose end mill seen in FIG. 1;
F1G. 2a is an end view of the prior art flat end mill seen in FIG. 1a;
FIG. 2b is an end view of the prior art drill seen in FIG. 1b;
FIG. 3 is an enlarged view of the center portion of a prior-art ballnose end mill FIG. 2;
FIG. 4 is an end view of a further prior-art ballnose end mill;
FIG. 5 is an enlarged view of the center portion of FIG. 4;
FIG. 6 is an end view of an ballnose end mill according to the present invention;
FIG. 6a is an end view of an flat end mill according to the present invention;
FIG. 6b is an end view of an drill according to the present invention;
FIG. 7 is a an enlarged view of the center portion of FIG. 6; FIG. 6a; FIG. 6b;
FIG. 8 is an end view of a further embodiment of the ballnose end mill according to the present invention;
FIG. 8a is an end view of an flat end mill according to the present invention;
FIG. 8b is an end view of an drill according to the present invention; and
FIG. 9 is an enlarged view of the center portion of FIG 8, FIG. 8a; FIG. 8b;

### Full description of the Invention

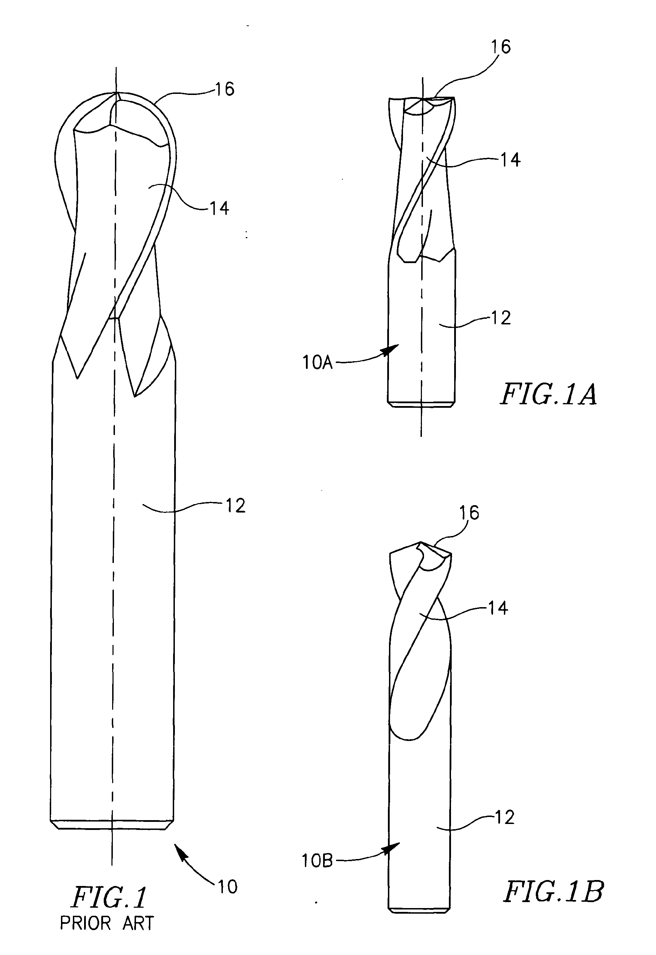

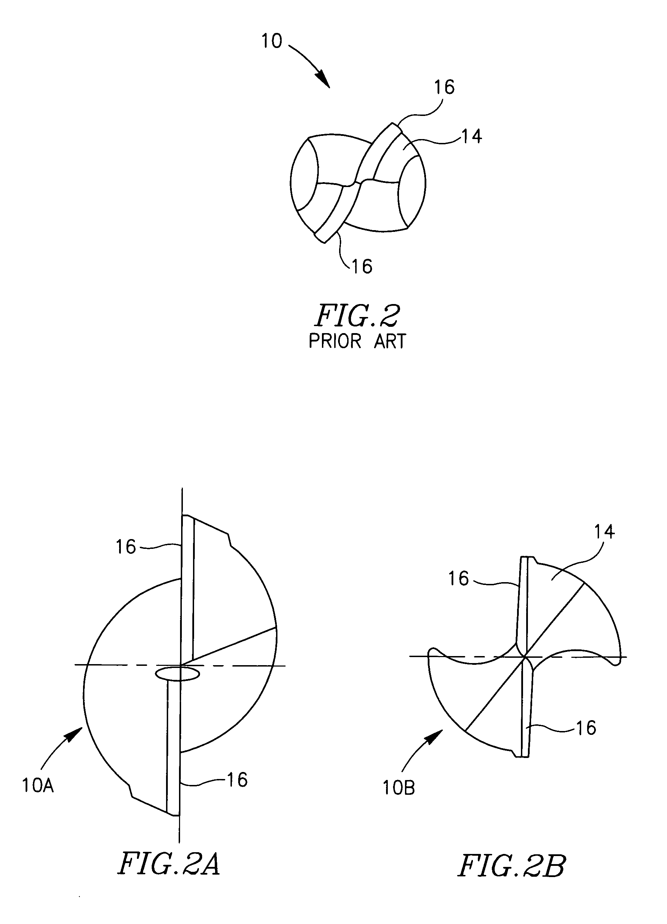

There is seen in FIGS.. 1 to 3 a prior-art 2-flute helical ballnose end mill 10, which corresponds to Japanese patents nos. JP2001334405 and JP2001341026. In FIGS. 1a and 2a there is seen a prior art 2 flute helical flat end mill while FIGS. 1b and 2b illustrate a prior art 2 flute helical drill. The tools 10, 10a and 10b have a shank portion 12 and tooth flanks 14 capped by a cutting edge 16.

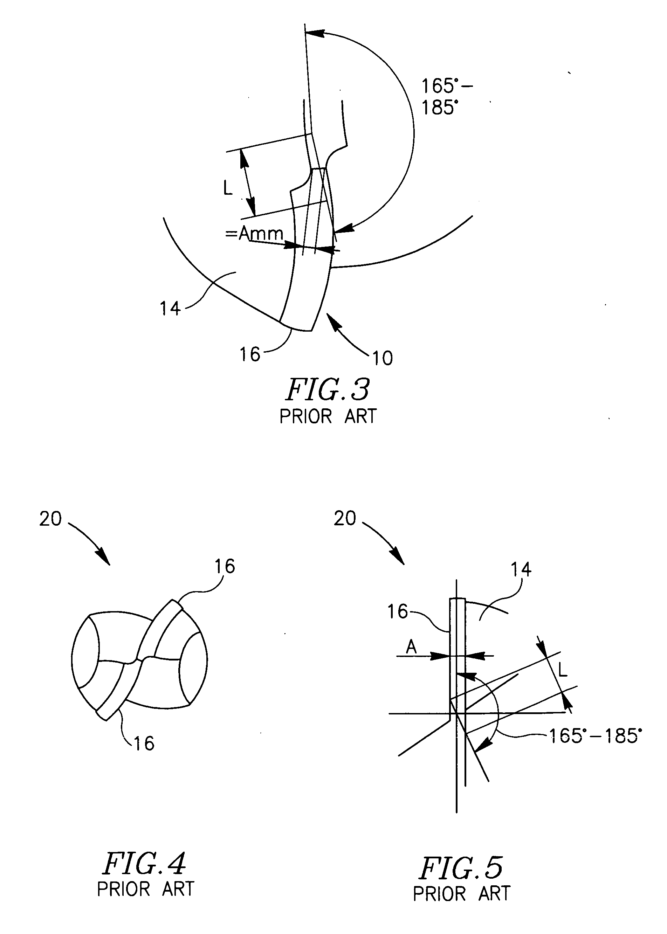

The cutting edge 16 of the cutter in FIG. 2, 2a and 2b and again greatly enlarged in FIG. 3 carries around the hemispherical end with an off-set A. The width of the chisel edge 18 is between 0.01 - 0.20 mm.
The chisel edge angle relative to the cutting edge is 165- 185°, so accordingly the chisel edge can be in line with the cutting edge. The length L of the chisel edge 18 is between 3 - 7 times that of the chisel width.
A slightly different version of an end mill 20 is seen in FIGS. 4 and 5. The offset distance A is between 0.05 and 0.40 mm and again the chisel edge angle is 165- 185°

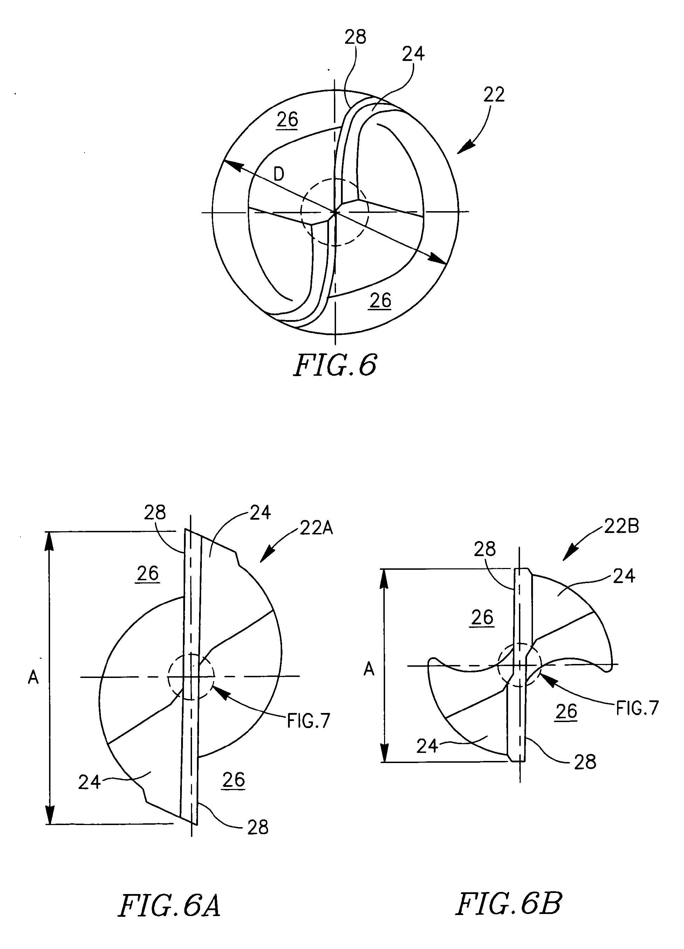

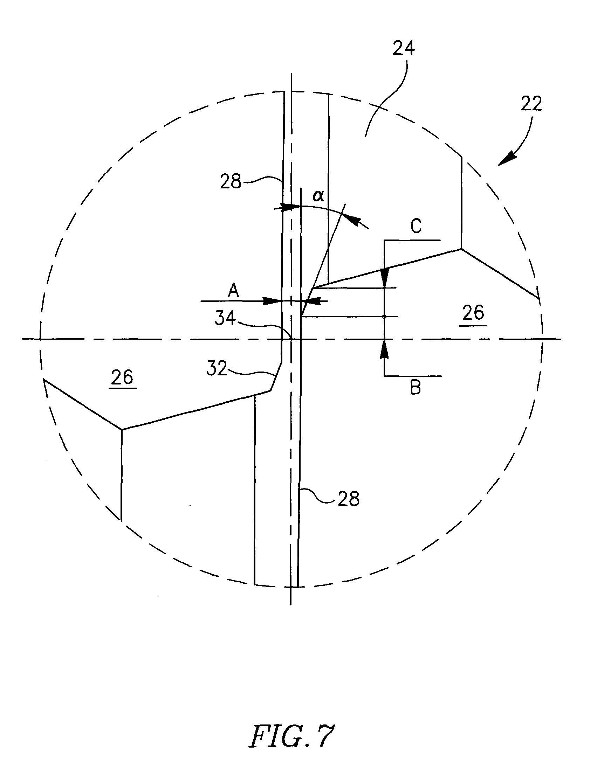

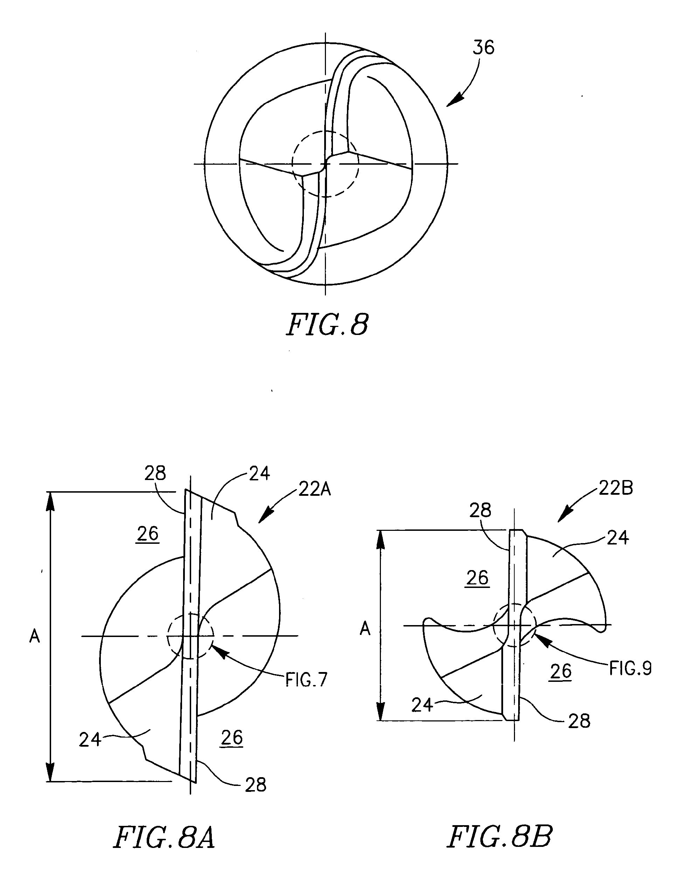

Referring now to FIGS. 6, 6a, 6b and 7, there is seen a ballnose end mill 22, a flat end mill 22a and a drill 22b of diameter D according to the present invention. The end mill 22, the flat end mill 22a and the drill 22b are configured for improved chip removal, and comprises a body portion 12, seen in FIG. 1, FIG. 1a, FIG. 1b to be gripped by a machine tool and two flutes 26 machined to form a cutting tooth 24 adjacent to the flute 26. Each tooth 24 is provided with a cutting edge 28, which continue, with a side-to-side changeover at the center.
Viewings the end mill 22, the flat end mill 22a and the drill 22b endwise there is seen a tooth-end cutting edge 32 starting proximate to the cutter center 34 at a distance B above the x axis and a distance 0.5A to the right of the y axis, The tooth end cutting edge 32 extends at an angle a relative to the y axis for a length C.

The following values are typical for a ballnose end mill intended for use for the machining of hard materials:
A = the total off-set between cutting edges of two teeth disposed at 180° to each other = 0.003D to 0.030D.
B = between 0.3A to 1.5A.
C also = between 0.3A to 1.5A, but can be different from B.
Angle a = 5° to 45°.
Considering an end mill D =16 mm diameter for hard steels, typical values are as follows:
A= 0.2 mm
B = 0.1 mm
C = 0.25 mm
a = 35°

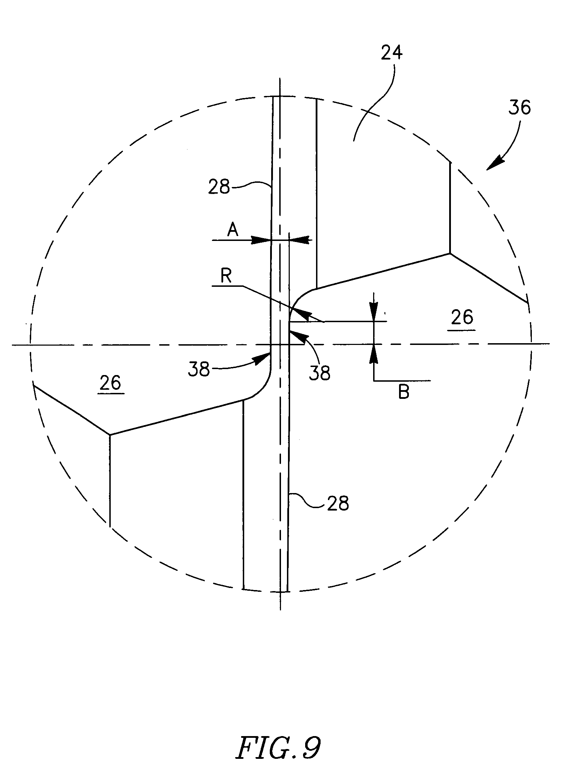

Turning now to FIG. 8, FIG. 8a, FIG. 8b and 9, there is depicted a further embodiment of a ballnose end mill 36, a flat end mill 36a, and a drill 36b also according to the present invention. A tooth-end cutting edge 38, is seen starting at a distance B above the x axis and a distance 0.5A to the right of the y axis, as seen in FIG. 7. However the edge 38 is curved at a radius R.
The locus of the radius R is to the right of the y axis when viewing the upper tooth 28 of the tools. Using the x-y coordinates, the locus is at y=B and x=0.5A + R
The value of R is 0.5A - 5A, which in the given example where D=16 then R = about 0.4 mm.

For both brevity and clarity the examples illustrated have only 2 flutes. The same geometry is however equally applicable to larger tools having 4, 6, 8 or 10 flutes.
The scope of the described invention is intended to include all embodiments coming within the meaning of the following claims. The foregoing examples illustrate useful forms of the invention, but are not to be considered as limiting its scope, as those skilled in the art will readily be aware that additional variants and modifications of the invention can be formulated without departing from the meaning of the following claims.

Where technical features mentioned in any claim are followed by reference signs, those reference signs have been included for the sole purpose of increasing the intelligibility of the claims and accordingly such reference signs do not have any limiting effect on the scope of each element identified by way of example by such reference signs.

## Claims

1. A tool such as a ballnose end mill, or flat end mill, or drill of diameter D configured for improved chip removal, comprising a body portion to be gripped by a machine tool and a plurality of flutes machined to form a cutting tooth adjacent to said flute, each tooth being provided with a chisel edge, the cutting end being semispherical, or flat, or like drill point and when viewed endwise there being seen a cutting edge starting proximate to the cutter center at a position B above the x axis and 0.5A to the right of the y axis, said cutting edge extending at an angle a relative to the y axis for a length C, value of A, being the total off-set between cutting edges of two teeth disposed at 180° to each other, for the machining of different materials is 0.003D to 0.030D, both B and C having lengths of between 0.3A to 1.5A, and the angle a having a value of between 5° - 45°.

2. The tool as claimed in claim 1, wherein said cutting edge starting at position B is curved at a radius R, the locus of said radius being at its right side when viewing the upper tooth of the tool's end, and the value of R is 0.5A - 5A.

3. A ballnose end mill, or flat end mill, or drill configured for improved chip removal, substantially as described hereinbefore and with reference to the accompanying drawings.
